# EUROPEAN PATENT SPECIFICATION

(11) **EP 2 404 506 B1**
(45) Date of publication and mention of the grant of the patent: **04.05.2016**
(21) Application number: 10748859.5
(22) Date of filing: 02.03.2010
(51) Int. Cl.: A23L 7/113

(54) **INSTANT DRY NOODLES AND METHOD FOR PRODUCING SAME**
INSTANT-TROCKENNUDELN UND VERFAHREN ZU IHRER HERSTELLUNG
NOUILLES DÉSHYDRATÉES INSTANTANÉES ET LEUR PROCÉDÉ DE FABRICATION

(30) Priority: 06.03.2009 JP 2009053969
(43) Date of publication of application: 11.01.2012
(73) Proprietor: Sanyo Foods Co., Ltd., MInato-ku, Tokyo 107-0052 (JP)
(72) Inventor: NAGAYAMA, Yoshiaki, Maebashi-shi Gunma 371-0811 (JP)
(74) Representative: Thurston, Joanna
(86) International application number: PCT/JP2010/053717
(87) International publication number: WO 2010/101268

(56) References cited:
- JP-A- 9 294 553
- JP-A- 59 063 152
- JP-A- 60 110 257
- JP-A- 61 132 132
- JP-A- 2000 093 106
- JP-A- 2002 253 152
- JP-A- 2002 330 716
- JP-A- 2006 122 020
- JP-A- 2006 288 239
- JP-A- 2007 222 139
- JP-B2- 2 599 208
- Anonymous: "AIPC Pasta and Noodle Production Plant, United States of America", , 23 October 2008 (2008-10-23), pages 1-3, XP002679609, Retrieved from the Internet: URL:http://web.archive.org/web/20081223222 819/http://www.foodprocessing-technology.c om/projects/aipc/ [retrieved on 2012-07-10]

## Description

### TECHNICAL FIELD

The present invention relates to a process for producing instant dried noodles by using hot air. More specifically, the present invention relates to a process for producing instant dried noodles by using hot air, to thereby provide noodles which is capable of making an improvement in taste (and/or flavor), texture (and/or oral sensation), and unfastening (or loosening) thereof, which could not been achieved by the prior art, wherein a solid fat or oil, and/or an emulsifier is added to a raw material for noodle, and then the resultant mixture is subjected to an usual method so as to obtain a dough for noodles, and a pressure is applied to the dough for noodles under a reduced pressure, to thereby provide the dough for noodles in the form of small masses (or lumps) or a flat plate thereof, which are then formed into a dough sheet (or strip), in a noodle-making step, as defined in the claims.

### BACKGROUND ART

Drying methods to be used for the production of instant noodles are classified into a frying drying method and a non-frying drying method. Among these drying methods, the non-frying drying method generally includes drying methods such as hot-air drying method, microwave drying method, freeze-drying method and cold- air drying method. In the non-frying drying method, in general, fried noodles and a non-fried noodles can be obtained by using wheat flour and various starches as a raw material therefor, and also using alkaline brine solution (i.e., "Kansui") in the case of Chinese noodles or using a polyphosphoric acid salts, etc., in the case of Japanese noodles, in place of the alkaline brine solution. In the production of noodles, an optional additive such as common or table salt, powdered egg, polysaccharide thickener, fat or oil, lecithin and the like can be added to the above raw material, and the resultant mixture is subjected to kneading, then is formed into noodles by using an usual method, and the resultant noodles are subjected to a steam cooking step, and to a drying step, by using a predetermined drying method, to thereby obtain the fried dry noodles, and non-fried dry noodles.

The methods of eating these instant noodles are roughly classified into two types, i.e., a type of stew cooking the noodles in a pot, and a type of cooking the noodles by pouring hot water thereto. In the former type of stew cooking in a pot, because of a large heat quantity to be used at the time of the cooking, the hot water in the pot can quickly be spread or penetrated into even in the interior of noodle strips (or strings), whereby the starch particles in the noodle strips can sufficiently be swollen, and therefore comparatively elastic texture of the noodle strips can be realized. In contrast thereto, in both of the cases of the fried noodles and non-fried noodles, since the quantity of heat to be applied to the noodles at the time of cooking is clearly small in case of the type of cooking wherein hot water is poured to the noodles (hereinafter referred to as "snack noodles"), the period of time to be required for the arrival of the hot water at the interior of noodle strips is longer than that in the case of the above stew cooking in a pot, whereby the starch particles in the noodle strips cannot be swollen sufficiently. Therefore, the "snack noodles" tends to have a texture to hardly be reconstituted (or restored), unless the noodle strips are formed into noodles in the form of flat and thin strips.

Herein, there will be described generally known features of the fried dry noodles and hot-air dried noodles.

The features of the frying drying method are such that the internal structure of the noodle strips, which have been dried by quick dehydration and drying, through a frying treatment of the noodle strips is formed into a porous structure, and becomes an edible state within a short period time, when hot water is poured on the resultant noodle strips, or the noodle strips are stewed in hot water. However, the noodles which have been obtained by this method have the following problems. That is, because of the porous structure thereof, the noodles show a porous texture, and it is difficult that they really have a "texture with viscoelasticity" which is similar to that of raw or fresh (or uncooked) noodles. Further, the noodles has strong frying odor, since they are produced by frying treatment thereof in an oil, and are is liable to cause the oxidation of the fat or oil, since the noodles contain a large amount of the fat or oil, to thereby result in poor taste or flavor.

In contrast thereto, the hot-air drying method has the following features. That is, since the entire noodle strips, which have been produced by this method, cause shrinkage due to the drying thereof with the hot air at about 100°C, to thereby be hardened, the resultant noodle strips have an internal structure including less bubbles or pores therein. Accordingly, the noodle strips have a relatively elastic texture, when they are reconstituted by pouring thereon hot water or by boiling the noodle strips. Further, in this case, the thus reconstituted noodle strips have a transparent external appearance. Therefore, the noodles which have been obtained by the hot-air drying method may easily have both of the texture and external appearance thereof, which are clearly close to those of the raw noodles, in comparison with those of fried noodles.

With respect to the recent consumers, they show a trend such that they prefer genuine or orthodox articles or goods in their daily life. Therefore, with respect to instant noodles, specifically, snack noodles such as non-fried dry noodles, they show a trend such that they desire to realize the "viscoelasticity" and "fresh texture" of such noodles, which are close to those of the raw noodles.

### Prior Art Documents

### Patent Documents

Patent Document 1: Japanese Examined Patent Publication (JP-B; KOKOKO) No, 63-52868
Patent Document 2: Japanese Unexamined Patent Publication (JP-A, KOKAI) No. 2000-93106
Patent Document 3: JP-A No. 61-13232
Patent Document 4: JP-A No. 2000-116310
Patent Document 5: JP-59063152
Patent Document 6: JP-2006/122020

Patent Document 5 describes rapid cooking noodles that can be prepared by adding to a powder mix of key ingredients an edible emulsifier which is solid at room temperature and/or edible oil or fat which is solid at room temperature. JP 2006/122020 describes a method for producing instance noodles comprising kneeding the raw, materials whether fat and/or emulsifier having a particle diameter of >0.15mm.

### DISCLOSURE OP THE INVENTION

### Problems to be Solved by the Invention

An object of the present invention is to provide instant noodles capable of solving the above-mentioned problems encountered in the prior art, and a process for producing the same.

Another object of the present invention is to provide instant noodles capable of meeting to the above demand of the recent consumers for the genuine or orthodox articles, and a process for producing the same.

### Means for Solving the Problem

As a result of earnest study/ the present inventors have found that a plurality of cavities or pores can be provided in the interior of noodle strips, by adding a powdered and/or granular fat or oil, or a powdered and/or granular emulsifier to a portion of a raw material, in a case where a vacuum dough sheet-extruding machine is used.

As a result of further study based on the above- mentioned novel discovery, the present inventor has also found that, on the basis of the presence of the above "plurality of cavities" in the interior of noodle strips" which have been obtained in the above manner, a remarkable improvement can be produced with respect to the problem encountered in the prior art concerning the taste or flavor, and the texture of the noodle strips.

The instant dried noodles comprises: Instant dried noodle prepared from a raw material for noodle comprising, at least, a main raw material, a solid fat or oil, and/or an emulsifier, wherein the instant dried noodle has an "unfastening period of time" in hot water at 100°C of 80 seconds or less such as defined by independent claim 1.

The present invention is directed to a process for producing instant dried noodle, as defined in the claims comprising: applying a pressure to a dough for noodle, which has been prepared from a raw material for noodle comprising a main raw material, a solid fat or oil, and/or an emulsifier, to thereby form the dough into small lumps or a plate shape; producing noodle strips from the dough by using an usual method; gelatinizing the noodle strips; and drying the noodle strips with hot air.

The reason why the above-mentioned effect can be obtained in the present invention with the above-mentioned constitution would be presumed as follows.

That is, according to the investigation and knowledge of the present inventor, it is presumed that, when a vacuum dough sheet-extruding machine is used in combination with the addition of a powdered and/or granular fat or oil, or a powdered and/or granular emulsifier to the raw material for noodles, the powdered and/or granular fat or oil, or the powdered and/or granular emulsifier in the interior of the noodle strips is melted in a gelatinization (or pregelatinization, conversion into alpha-state) step, so that fine pores can be formed in the interior of, and on the surface of the noodle strips. In that case, it can be presumed that the noodle strips can be dried without breaking a dense structure of the noodle strips, which is peculiar to those provided by the vacuum dough sheet-extruding machine, while controlling the density of the noodle strips.

As mentioned above, the density of the noodle strips can be controlled without breaking a dense structure of the noodle strips, which is peculiar to those provided by the vacuum dough sheet-extruding machine in the present invention, and therefore hot water can quickly be penetrated into the interior of noodle strips at the time of reconstitution of the noodle strips with hot water, whereby the problems encountered in the prior art (i.e., "poor reconstitution with hot water" and "too strong stiffness" of the noodle strips can be solved without weakening the merit or characteristic feature of the vacuum dough sheet-extruding machine.

In the present invention, it can be presumed that, according to the synergistic effect of the above effects, the feature of the vacuum dough sheet-extruding machine can be exhibited to the maximum extent, to thereby obtain the "texture of the noodles having viscoelasticity which is similar to that of raw noodles" and the "freshness which is similar to that of raw noodles". In addition, in the present invention, it can be presumed that the dense structure of the noodles, which is peculiar to those provided by the vacuum dough sheet-extruding machine, is not broken, and therefore the resultant noodle strips can show less stickiness of the surface thereof noodle strips in comparison with that in the case of the usual noodle-making. Further, it can be presumed that the present invention can provide noodle strips with remarkably improved "noodle strip-unfastening property" due to the synergistic effect of the original releasing effect of the powdered and/or granular fat or oil, or a powdered and/or granular emulsifier.

### Effect of the Invention

As describe hereinabove, the present invention can to provide instant noodles capable of meeting the demand of the recent consumers for genuine or orthodox articles, and a process for producing such instant noodles.

The present invention can also provide the following effects.
(1) The problem in the prior art is solved, while retaining the feature of the vacuum dough sheet-extruding machine. That is, it is possible to obtain noodles while taking better advantage of the feature of the vacuum dough sheet-extruding machine.
(2) The density of noodle strips can be controlled without substantially changing the degree of pressure reduction in the vacuum dough sheet-extruding machine, it is possible to obtain noodles capable of taking better advantage of feature of the vacuum dough sheet-extruding machine.
(3) It is possible to solve the problems concerning the "poor reconstitution with hot water" and the "too strong stiffness" in the prior art, which are attributable to the use of a vacuum dough sheet-extruding machine in the prior art.
(4) It is possible to remarkably improve the "unfastening property of noodle strips" of mass of noodles at the time of eating thereof.

### BRIEF DESCRIPTION OF THE DRAWINGS

Fig. 1 is a graph showing the results of the measurement of the breaking (or cut) strength of various dried noodles in Test Example 1.
Fig. 2 is a schematic sectional view showing a device system for measuring "unfastening period of time" (or period of time required for the unfastening) to be used in Test Example 2.

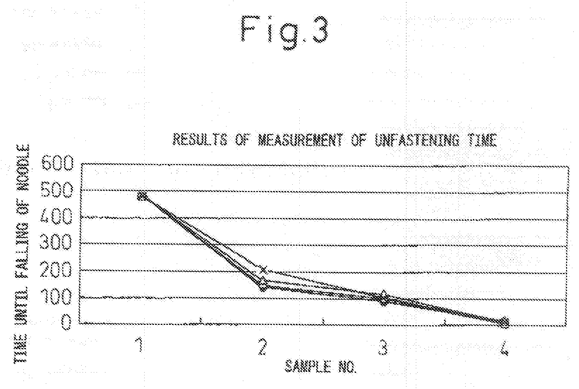

Fig. 3 is a graph showing the results of the measurement of "unfastening period of time" in Test Examples.
Fig. 4 is an electron micrograph (magnification: 70 times) of the textural structure of a longitudinal section of noodles, which were produced under the condition (1) in Test Example 1 (Photograph 1).
Fig. 5 is an electron micrograph (magnification: 70 times) of a textural structure of a longitudinal section of noodles, which were produced under the condition (3) in Test Example 1 (Photograph 2).
Fig. 6 is a microscopic micrograph (magnification: 65 times) of a textural structure of a surface of noodles, which were produced under the condition (2) of Test Example 1 (Photograph 3).
Fig. 7 is a microscopic micrograph (magnification: 65 times) of a textural structure of a surface of noodles, which were produced under the condition (4) in Test Example 1 (Photograph 4).

### MODE FOR CARRYING OUT THE INVENTION

Herein below, the present invention will be more specifically described with reference to the accompanying drawings, as desired. In the following description, "part(s)" and "%" representing a quantitative ratio, are based on mass, unless otherwise noted specifically.

### (Instant Noodle)

The instant noodle is characterized in that it has been produced from a raw material for noodle comprising, at least, a main raw material, and a solid fat or oil and/or an emulsifier; wherein the period of time required for the unfastening of the instant dried noodle(s) (hereinafter, referred to as "unfastening period of time") in hot water at 100°C is 80 seconds or less.

Such instant noodles may be obtained, by a production process as defined by the claims, wherein a dough for noodles is produced from a raw material for noodle comprising a main raw material, and a solid fat or oil (and/or an emulsifier); a pressure is applied to the resultant dough for noodles under a reduced pressure, to thereby provide the dough for noodles in the from of small masses (or lumps) or a flat plate (or plates) thereof, which are then formed into noodle strips in an; usual method; the resultant noodle strips are subjected to a gelatinization step; and then the resultant noodle strips are dried by using hot air.

The "instant dried noodles" are not specifically limited, as long as the present invention is applicable to such noodles. That is, the kind of the "instant dried noodles" and the form of the "instant dried noodles" are not specifically limited and specific examples thereof may include:
Chinese noodles, UDON (i.e., usually thick and usually white Japanese-style noodles produced from wheat flour),
SOBA (i.e., usually thin Japanese-style noodles produced from buckwheat), pasta or the like. The "instant dried noodles" may be either a so-called stewing type noodles, or a type of noodles to be cooked by pouring thereto hot water.

### (Preferable Physical Properties of Noodles)

The noodles may preferably have the following physical properties.

### (Unfastening period of time)

The dried noodles may preferably have a "unfastening period of time" of 80 seconds or less in hot water at 100°C, which can be measured under the conditions described in "Examples" appearing hereinafter.

Herein, the above-mentioned "unfastening period of time" refers to the period of time until the mass of noodles to be measured "completely" falls from a partition plate, as described hereinafter.

As a matter of course, in a case where the mass of noodles to be measured is abnormally "caught" on the partition plate due to a certain factor, whereby the time until the falling of the mass of noodles to be measured becomes incorrect, the obtained data of the period of time is regarded as "an error" and the measurement should be carried out again.

### (Breaking Strength)

The dried noodles may preferably have a "breaking strength" of the noodles, which can be measured under the conditions described in "Examples'" appearing hereinafter, of 90 to 130 g. The "breaking strength" may more preferably be 100 to 127 g, and particularly preferable 105 to 125 g (especially, 110 to 120 g).

### <Conditions for breaking strength measurement>

Rheometer: manufactured by FUDO KOGYO CO., under the trade name of NRM-2010-CW
Four noodle strips are placed on a plate and a breaking strength is measured at a table speed of 2 cm/min by using one piano wire having a diameter of 0.27 mm, and then an average is calculated.

### (Material of Noodles)

In the present invention, the material of noodles may not particularly limited. That is, it is possible to use materials, which have usually been used in the production of instant noodles, without any particular limitation. More specifically, for example, main raw materials and auxiliary raw materials described in "New Guide to Instant Noodles" (i.e., "Shin-Sokusekimen Nyuumon") supervised by Corporate Juridical Person, Convenience Foods Industry Association of Japan (i.e., Sokuseki Shokuhin Kyogyo Kyokai), pp.52-62 can be used in the present invention.

### (Main Raw Material)

The main raw material comprises at least one selected from: wheat flour, durum powder, soba powder, barley flour, starch and the like. Among these raw materials, specific examples of the main raw material, which can be preferably used, may include: wheat flour such as Australian Standard (medium-hardness) White wheat (ASW, protein content about 10%), or American hard red wheat (HRW, protein content about 11%), or a starch such as potato starch, tapioca starch, waxy corn starch, corn starch ,wheat starch, etc. It is also possible to use those obtained from these raw materials, such as ether-chemically modified starch, ester chemically modified starch, crosslinked chemically modified starch and acid chemically modified starch.

### (Auxiliary Raw Material)

Specific examples of the auxiliary raw material, which is usable in the present invention may include: alkaline brine solution, phosphoric acid salts, salt, thickening polysaccharides, egg, gluten and the like.

### (Fat or oil and/or Emulsifier)

The fat or oil and/or the emulsifier, which is usable in the present invention, will be described below. In view of the effect of "texture having viscoelasticity which is similar to that of raw noodles", "freshness which is similar to that of raw noodles" and "unfastening of noodle strips", the fat or oil and/or the emulsifier may preferably be spherical and/or granular.

### (Spherical and/or Granular)

In the fat or oil and/or the emulsifier used in the present invention, "spherical and/or granular" refers to the shape or form of the particles such that that the length, width and thickness of the particles of the fat or oil, and/or the emulsifier are relatively uniform or comparable. In view of the effect of "unfastening of noodle strips", particle size (or particle diameter) of the fat or oil or the emulsifier may be 0.1 mm or more, as defined by the claims, the particle size is of 0.1 mm or more. In the present invention, the particle size of the fat or oil or the emulsifier may preferably be measured by the following method.

### <Method of Measuring Particle Size>

The particle size was automatically measured by a sonic sieving method, by use of Ultrasonic Vibrating-type Fully Automatic Siever Particle-size Distribution Analyzer Robot Shifter RPS-85 (SEISHIN ENTERPRISE Co., Ltd.).

### (Specific Examples of Fat or oil, or Emulsifier)

The kinds of the fat or oil, or the emulsifier which is usable in the present invention are There is not particularly limited. That is, the fat or oil, or the emulsifier may appropriately be selected from various fats and oils, or emulsifiers, which have usually been used in the fields of foods and instant noodles. A plurality of these fats and oils, or emulsifiers can also be used in combination, as desired.

Examples of the above-mentioned fat or oil may include: lard, palm oil, soybean oil, coconut oil, sunflower oil, cotton seed oil, corn oil, rice-bran oil, rapeseed oil, sesame oil, and the like. It is possible to appropriately control the melting point of each of the fats or oils by the hydrogenation thereof or the like, in accordance with an usual method therefor.

Examples of the above-mentioned emulsifier may include: monogly (glycerin fatty acid esters; monoglycerides), sugar ester, organic acid monogly- and polyglycerin esters, sorbitan esters, propylene glycol esters, and the like.

### (Process for Producing Fat or oil, or Emulsifier)

The process for producing a fat or oil, or an emulsifier, which is usable in the present invention, is not particularly limited. Examples of the process usable in the present invention may include: a spray cooling method, a spray drying method, a drum drying method, and the like. In view of the efficiency in the effect of the present invention, a spray cooling method may be more preferable. According to the spray cooling method, a spherical or granular fat or oil having a particle size of 0.1 mm or more, or an emulsifier can be obtained relatively easily, by melting a fat or oil, or an emulsifier, and the melted fat or oil or emulsifier is subjected to spraying in a cooling tower (chiller).

The powdered fat or oil and the powdered emulsifier, which can be obtained by the spray drying method have a small particle size (usually, the thus obtainable particle size thereof is about 0.03 mm). Therefore, it can be slightly difficult relatively, to adjust the particle size to 0.1 mm or more, when this method is compared with the above-mentioned spray cooling method.

According to the drum drying method, when particles having a particle size (thickness) of 0.1 mm or more is intended to be obtained, the shape of the thus obtained powdered fat or oil tends to be particles in the form of relatively large flakes. Therefore, in order to obtain fat or oil, or an emulsifier in the form of spheres or granules, in some cases, it is necessary to subject the resultant particles to s secondary processing using a crusher of pulverizer grinder such as mill. In this case, a variation in the shape and size of the particles is liable to occur, and the resultant yield is lowered, to thereby increase the production costs therefor.

Examples of the above-mentioned various powdered fats and oils, or emulsifier may include: "Spray Fat PM", mfd. by Riken Vitamin Co., Ltd., with respect to particles which have been produced by the spray cooling method. Examples thereof may include "UNISHORT K", mfd. by Fuji Oil Co., Ltd., with respect to particles which have been produced by the drum drying method.

### (Process for producing noodles)

As preferable steps of the process for producing noodles before a drying step therefor, it is possible that a raw material for noodles containing at least a main raw material (for example, wheat flour), and a spherical and/or granular fat or oil, and/or an emulsifier having a particle size of 0.1 mm or more is kneaded with water, to thereby obtain a dough for noodles; a pressure is applied to the resultant dough for noodles by use of an extruder or an extrusion molding machine under a reduced pressure, to thereby provide the dough for noodles in the from of small masses (or lumps) or a flat plate thereof. The flat plate or small masses are subjected to a "dough-sheet production by compounding" step (i.e., the flat plate or small masses are formed into a sheet shape thereof), and after the "dough-sheet production by compounding" step, the resultant dough sheet is cut out by a cutting edge so as to form noodle strips; the noodle strips are continuously gelatinized, and then the resultant noodle strips are dried by using hot air, to thereby obtain instant noodle strips.

### (Vacuum dough sheet-extruding machine)

The device for forming an extruded dough sheet under degassing by using an extruder or the like, which is usable in the present invention is not particularly limited. More specifically, it may be preferred to use, for example, a degassing device constituting device for producing a dough sheet (hereinafter referred to as a "vacuum dough sheet-extruding machine") disclosed in JP-A No. 61-132132 (Japanese Patent Application No. 59-254855).

A specific condition to be used for the extruder may be such that a pressure is applied to a dough for noodles by use of an extruder (or an extrusion screw), or an extrusion molding machine under a degassing condition of a range of 650 to 760 mmHg in terms of a vacuum degree, and the dough for noodles is caused to be extruded through dies each having a diameter of 5 to 50 mm, whereby dough (or material) for noodles having a cylindrical shape is formed and is fed under a pressure. At the time of the extrusion of the resultant dough for noodles, the dough can be cut intermittently into small masses or lumps thereof having a size or length of 5 to 300 mm. Alternatively, in a case where the provision of the dough sheet is intended, the dough for noodles can also be extruded so as to provide the dough in the form of a dough sheet.

### (Gelatinization Treatment Step)

The gelatinization treatment step in the present invention can be appropriate carried out by using a boiling treatment using boiled hot water, a steam cooking treatment using steam, or the like. More preferably, a steamer using steam may preferably be used, for the following reason. That is, in the boiling treatment, the powdered and/or granular fat or oil, or powdered and/or granular emulsifier, which has been added to noodle strips, is liable to be eluted out from the interior of the noodle strips, and therefore, it may become relatively difficult to obtain spaces or voids in the interior of the noodle strips.

The thus obtained gelatinized noodle strips are introduced into drying baskets so that the noodle strips are shaped and each of the drying baskets is filled with the noodle strips in an amount of one meal thereof. 30 Then, the noodle strips are subjected to a hot-air drying step, to thereby obtain instant dried noodles. [0048) (Hot-Air drying step)

In the hot air drying method to be used in the present invention, noodle strips may preferably be dried with hot air, which has been controlled at a preferable temperature of 60 to 100°C (more preferably 80 to 90°C), and a preferable wind velocity of 1 to 10 m/s (more preferably 3 to 5 m/s), until a final moisture content of mass of noodles becomes 6 to 14% (preferably 8 to 10%).

When the drying temperature is lower than 80°C, the drying period of time may tend to become longer, because of the poor drying efficiency thereby. In contrast thereto, when the drying temperature is higher than 100°C, such a temperature exceeds the boiling point of the moisture in the noodle strips, and accordingly, it becomes difficult to dry the noodle strips slowly. As a result, the foaming (or production of bubbles) in the noodle strips may be initiated, whereby it tends to become difficult to obtain dense noodle strips.

When the wind velocity at the time of the drying of the noodle strips is less than 1 m/s, it becomes difficult to satisfactorily ventilate or aerate the interior of the mass of noodles, whereby an unevenness in the drying treatment may tend to occur. In contrast thereto, when the wind velocity is more than 10 m/s, the mass of noodles may be pressed against the upper portion or lower portion of the molding (or shaping) basket, so as to fail to achieve the mass of noodles in a sparse state, and the uniform drying thereof becomes difficult, whereby a drying unevenness is liable to occur and poor unfastening of the noodle strips may tend to occur at the time of the eating thereof.

The present invention will be described in more detail by way of Examples.

### Examples

### Test Example 1

The synergistic effect of a vacuum dough sheet-extruding machine and the kneading with a powdered fat or oil was confirmed by the following tests.

### <Production of Noodle strips>

Formulation: 9 kg of wheat flour (ASW, protein content 9.5%), 1 kg of a potato starch (mfd. by Hokuren), 100 g of common salt, 20 g of alkaline brine solution (carbonic acid Na), and 3,400 ml of water.

### Conditions before the drying:

Noodle strips with a noodle thickness of 1.1 mm, which had been obtained by using a cutting edge of No. 20 (rectangular), were cooked with steam at 0.5 kg/cm² for 3 minutes, and the resultant noodle strips were cut into masses of the steamed noodles each having a noodle weight of 90 g. Then, the steamed noodles was filled in a mold for drying (φ (diameter)=120 mm) and dried at 85°C.

In a case where a vacuum dough sheet-extruding machine was used, the conditions therefor were as follows.

A pressure was applied to a dough for noodles, while degassing was conducted at vacuum degree of 730 mmHg, and the dough was subjected to extrusion through dies each having a diameter of 8 mm, to thereby extrude the dough for noodles having a cylindrical shape, and the resultant dough was cut into chips each having a length of 20 mm. The thus obtained small lumps of the dough were subjected to the "dough-sheet production by compounding" step. Thereafter, in the same manner as in the above, noodle strips with a noodle thickness of 1.1 mm, which had been obtained by using a cutting edge of No. 20 (rectangular), were cooked with steam at 0.5 kg/cm² for 3 minutes, and the resultant noodle strips were cut into masses of the steamed noodles each having a noodle weight of 90 g. Then, the steamed noodles was filled in a mold for drying (φ (diameter)=120 mm) and dried at 85°C.

When a powdered fat or oil was used, the conditions therefor were such that an extremely hardened palm oil having a melting point of 62°C and an average particle size of 0.1 mm was used.

Conditions for Use of Vacuum dough sheet-extruding machine and Addition of Powdered Fat or oil:
The following four sets of conditions were used.

### (Four Kinds of Conditions)

(1) A vacuum dough sheet-extruding machine was not used, and a powdered fat or oil was not added (final moisture content: about 10%).
(2) A vacuum dough sheet-extruding machine was not used, and a powdered fat or oil was added (final moisture content: about 10%).
(3) A vacuum dough sheet-extruding machine was used, and a powdered fat or oil was not added (final moisture content: about 10%).
(4) A vacuum dough sheet-extruding machine was used, and a powdered fat or oil was added (final moisture content: about 10%)

### <Measurement of Moisture Content>

The moisture content was measured by using the following procedure.

Electric dryer: trade name of DN-41, mfd. by Yamato Scientific Co., Ltd.

2 g of the noodle strips obtained above were dried by using an electric dryer at 105°C for 2 hours, so that the moisture contents thereof before and after the drying were measured, and the moisture content of the noodle strips was determined on the basis of the difference in weight between those of the noodle strips before and after the drying.

### (Measurement of breaking strength of Noodle strips)

In a polystyrene cup with a draft capacity of 510 ml (mfd. by Atsugi Plastics K.K.), 60 g of noodle strips sample whose breaking strength was to be measured, was placed, and hot water at 100°C was poured into the polystyrene cup so as to fill the cup with the hot water until the draft line of the cup. Then, the cup was quickly covered with an aluminum foil, and thereafter, the polystyrene cup was left standing as it was, for 3 minutes. After the removal of the aluminum foil, the noodle strips was unfastened by using chopsticks, and the measurement of the "period of time after the reconstitution of the noodle strips with hot water" was started. In this case, a stopwatch mfd. by SEIKO S-YARD Co. under the trade name of SEIKO stopwatch S052 was used, as a measure for measuring the period of time.

A period of time of 1 minute (60 seconds) was precisely counted from the beginning of the time measurement by using the stopwatch. Thereafter, the hot water was quickly separated from the noodle strips, and then the breaking strength of the noodle strips was measured by using a rheometer.

### <Conditions for Measurement of breaking strength>

Rheometer: mfd. by FUDO KOGYO CO., under the trade name of NRM-2010-CW
Four noodle strips were placed on a plate, and the breaking strength thereof was measured by using a piano wire, and an average breaking strength was calculated from the thus obtained values for the above four noodle strips.

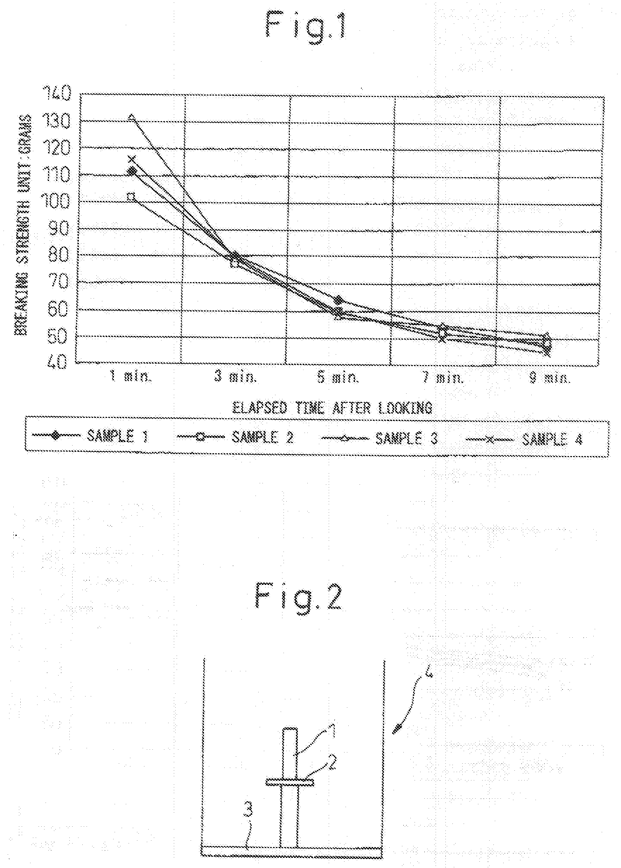

The measurement results obtained above are shown in a graph of Fig. 1.

It will be understood from Fig. 1, that in the samples which had been produced under the above condition (3), noodle strips with strong stiffness were obtained by using a vacuum dough sheet-extruding machine. It will be also understood that in the samples which had been produced under the above condition (4), too strong stiffness of the noodle strips was suppressed by the addition of the powdered fat or oil in combination with the use of the vacuum dough sheet-extruding machine.

It was found that the breaking strength which had been measured by using the above procedure was suitable for instant noodles, when the value of the breaking strength was about 90 to 130 g. When the breaking strength was more than 130 g, it was found that the instant noodles had a "hard" food texture. When the breaking strength was less than 90 g, it was found that the instant noodles had a food texture with "weak" stiffness.

The following Table (T-4) shows the results of the sensory tests and the noodle-making suitability tests for the noodles which had been obtained the above procedure.

Table (T-4): Sensory tests and noodle-making suitability tests for the noodles produced under the conditions (1) to (4)

**Table (T-4)**

| | Transparency at the time of eating | Heaviness of noodles at the time of eating | Reconstitution with hot water | Stiffness | Noodle-making suitability, Noodle-making property |
|---|---|---|---|---|---|
| (1) | 3 | 2 | 3 | 2 | 4 |
| (2) | 3 | 2 | 5 | 1 | 2 |
| (3) | 5 | 5 | 1 | 10 | 5 |
| (4) | 5 | 5 | 5 | 5 | 5 |

With respect to the stiffness, the score "5" was most excellent. When the score becomes larger than 5, it shows that the stiffness was too strong.

It will be understood from Table (T-4) that it was possible to improve the reconstitution of the noodle strips with hot water by adding to the material therefor, a powdered and/or granular fat or oil, or a powdered and/or granular emulsifier, without lowering the viscoelasticity, transparency, heaviness and the like of the noodles as the features of the vacuum dough sheet-extruding machine, to thereby provide well-balanced quality of the noodles under the above condition (4).

Herein, as a matter of importance, when a powdered and/or granular fat or oil, or a powdered and/or granular emulsifier is used, it is preferred to use such a powdered and/or granular fat or oil, etc., in combination with a vacuum dough sheet-extruding machine. The effect of the present invention can further be enhanced by using such a combination. That is, with reference to the evaluation of the condition (ii), when the raw material was kneaded with a powdered and/or granular fat or oil, or a powdered and/or granular emulsifier, without using a vacuum dough sheet-extruding machine, there was a tendency that cavities could be formed in the internal structure of the resultant noodle strips, to thereby improve only the reconstitution of the noodle strips with hot water. However, In contrast thereto, there was a tendency that it was difficult to achieve an improvement in the viscoelasticity, heaviness, stiffness and the like of the noodle strips. Further, in a case where a powdered and/or granular fat or oil, or a powdered and/or granular emulsifier was used alone, there was also a tendency that a poor strength of the resultant dough sheet could cause a problem that the "noodle-making property or binding property was poor or absent (or **noodle strips were** split)", and "the resultant noodles were liable to be broken" in the noodle-making step.

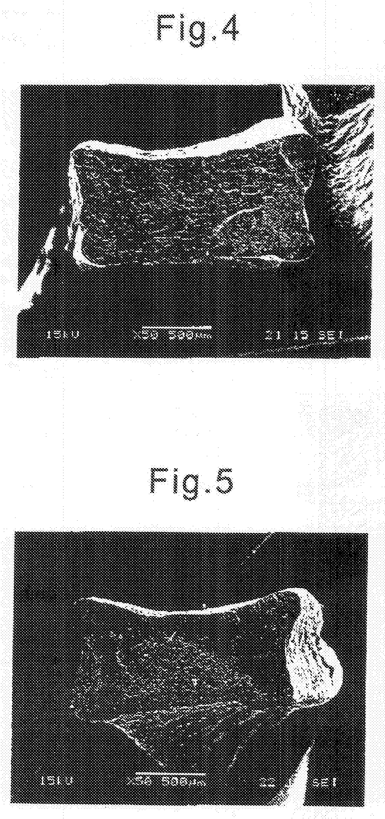

For the purpose of comparison with each other, Figs. 4 to 7 show micrographs of a cross section and a surface of the resultant noodles, which were obtained by carrying out each of the synergistic effect tests with respect to the above-mentioned Test Example 1.

Fig. 4 is an electron micrograph (magnification: 70 times) of the textural structure of a longitudinal section of noodles, which were produced under the condition (1) in Test Example 1 (Photograph 1).

Fig. 5 is an electron micrograph (magnification: 70 times) of a textural structure of a longitudinal section of noodles, which were produced under the condition (3) in Test Example 1 (Photograph 2).

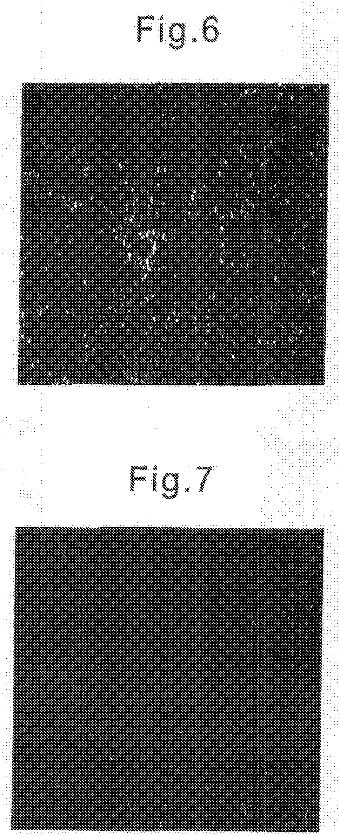

Fig. 6 is a microscopic micrograph (magnification: 65 times) of a textural structure of a surface of noodles, which were produced under the condition (2) of Test Example 1 (Photograph 3).

Fig. 7 is a microscopic micrograph (magnification: 65 times) of a textural structure of a surface of noodles, which were produced under the condition (4) in Test Example 1 (Photograph 4).

With reference to the above-mentioned micrograph 2 (Fig. 5), it will be understood that the noodle strips have an internal structure with less cavities, when compared with those of micrograph 1. This is a characteristic structure of the product, which has been produced by using a vacuum dough sheet-extruding machine.

In contrast thereto, with reference to the above-mentioned micrograph 4 (Fig, 7), it will be understood that cavities, which have been formed by adding a powdered and/or granular fat or oil, or a powdered and/or granular emulsifier to the raw material, are formed on the surface of the noodles. In the micrograph 3 (Fig. 6), those cavities are absent.

### Test Example 2

### <Measurement of Unfastening Effect>

The unfastening effect of noodle strips which had been obtained under the above conditions (1) to (4) was measured by using the following method.

The obtained dried noodles was subjected to the measurement using a device which had been fabricated by referring to a "method for measuring degree of unfastening" described in "Foods and Science (Shokuhin to Kagaku)", Vol. 35, pp.105 (October, 1993). Fig. 2 shows a schematic view of the measuring device. In this Fig. 2, reference numeral 1 denotes a prop (stick for unfastening; diameter 6 mm, 22 mm in length), reference numeral 2 denotes a partition plate (24 mm), reference numeral 3 denotes a bottom plate (145 x 145 mm), and reference numeral 4 denotes a vessel for measuring (120 mm in height).

### (Measurement of Unfastening degree of Noodle strips)

Hot water (1,500 ml) at 100°C was poured into the box shown in Fig. 2 and the box was left standing as it was for 3 minutes. After the elapse of time of 3 minutes, a shaker was operated at 60 rpm, and the period of time until the mass of noodles completely fell from the partition plate was measured.

The measurement results obtained in the above procedure are shown in Table (T-5).

**Table (T-5): Results of measurement of unfastening (seconds)**

| | | | | | | Average (seconds) | Standard deviation |
|---|---|---|---|---|---|---|---|
| (1) | 480 | 480 | 480 | 480 | 480 | 480 | - |
| (2) | 143 | 150 | 167 | 186 | 207 | 170.6 | 26.3 |
| (3) | 90 | 101 | 115 | 85 | 105 | 99.2 | 12 |
| (4) | 20 | 8 | 15 | 12 | 17 | 14.4 | 4.6 |

In case of the condition (1), the time of 480 seconds was explicitly described as a maximum value, because the unfastening of the mass of noodles did not occur, even when the period of time exceeded 480 seconds or more.

As shown in the above Table (T-5), it will clearly be understood that the unfastening of the noodle strips is satisfactory in the case of the condition (4). It will also be understood that the synergistic effect of the vacuum dough sheet-extruding machine and the powdered and/or granular fat or oil, or a powdered and/or granular emulsifier exerts an excellent unfastening effect even in the case of the unfastening degree of the noodle strips.

### Test Example 3

### <Comparison Test of Various Fats and Oils>

In order to show the effect of the present invention due to a difference in the shape and size of the fat or oil, or an emulsifier, comparison tests for various kinds of fats and oils were carried out by using the following methods (i) to **(x)**. The raw material for the fat or oil was unified to palm oil (melting point: 50°C). The following data show the thus obtained effect of the present invention due to a difference in size of the fat or oil, which was attributable to a difference in the production process therefor.

(i) Spray drying method Spherical Particle size of 0.03 mm
(ii) Drum drying method flaky Particle size of 0.1 × 0.5 × 0.1 mm (length × width × thickness)
(iii) Spray cooling method Spherical Particle size of 0.1 mm
(iv) Spray cooling method Spherical Particle size of 0.15 mm

The test method used herein was based on the following "Test method B".

### Test Method B

Wheat flour (800 g) and potato starch (200 g), as powder raw materials, were mixed with 15 g of each of the above-mentioned various fats and oils (i) to (x), and the resultant mixture was kneaded with kneading water, which had been prepared by dissolving 3 g of alkaline brine solution and 10 g of common salt in 320 ml of water, to thereby obtain dough for noodles. The thus obtained dough was subjected to extruding by using an extruder or an extrusion molding machine. By use of the machine, a pressure was applied to the dough for noodles while degassing the interior of the machine at a degree of vacuum of 730 mmHg, to thereby extrude the dough in a cylindrical shape through dies each having a diameter of 8 mm. The dough was then cut into chips thereof each having a length of 50 mm. The resultant lumps of the dough were subjected to a "dough-sheet production by compounding" step, and thereafter, formed into noodle strips with a cutting edge of 20 (rectangular) and a noodle thickness of 1.20 mm, and the noodle strips were continuously subjected to steam-cooking. The thus obtained steam-cooked noodle strips were cut into lumps of steam-cooked noodles each having a weight of 90 g, and then were introduced into drying baskets so that the noodle strips are shaped and each of the drying baskets was filled with the noodle strips in an amount of one meal thereof. Then, the noodle strips were dried in a dryer for 40 minutes which had been set at a temperature of 80°C and a wind velocity of 4 m/s, to thereby obtain instant Chinese noodles having a final moisture content of 10%.

The following Table (T-6) shows the effect of the present invention attributable to a difference in shape and size of the fat or oil.

**Table (T-6): Effects of invention due to difference in shape and size of fat or oil**

| | Viscoelasticity | Transparency at the time of eating | Heaviness of noodle strips at the time of eating | Reconstitution with hot water | Stiffness |
|---|---|---|---|---|---|
| (1) | 4 | 5 | 5 | 2 | 9 |
| (2) | 5 | 5 | 5 | 4 | 5 |
| (3) | 5 | 5 | 5 | 4 | 5 |
| (4) | 5 | 5 | 5 | 5 | 5 |

With respect to the stiffness, the score "5" was most excellent. The score exceeding 5 shows that the stiffness was too strong.

As shown in the results of Table (T-6), it will be understood that the size of the powdered fat or oil to be usable in the present invention, was important. When the powdered fat or oil has a particle size of 0.03 mm or less, no effect was obtained. That is, a fat or oil having a large particle size which can be obtained by a spray cooling method or a drum drying method, more specifically, a spherical fat or oil having a particle size of 0.1 mm or more, preferably 0.15 mm or more can solve the "poor reconstitution with hot water" problem and the "too strong stiffness of noodle strips" problem, without weakening the characteristic features of the vacuum dough sheet-extruding machine.

### Test Example 4

### <Difference due to Melting Point of Fat or oil>

In order to show the effect of the present invention due to a difference in melting point of a fat or oil and emulsifier, comparison tests were carried out by using the following various fats or oils and emulsifiers (A) to (I). With respect to the test method, which were based on the above-mentioned "test method B", 15 g of each of the following various fats or oils or emulsifiers (A) to (I) was used and comparison tests were carried out, respectively.

A: Rapeseed oil Liquid Particle size -
B: Palm oil Pasty Particle size -
C: Palm oil Spherical Particle size of 0.1 mm Melting point of 50°C
D: Rapeseed oil Spherical Particle size of 0.1 mm Melting point of 70°C
E: Polyglycerin fatty acid ester Spherical Particle size of 0.1 mm Melting point of 70°C
F: Monoglycerin fatty acid ester Liquid Particle size -
G: Monoglycerin fatty acid ester Spherical Particle size of 0.1 mm Melting point of 75°C
H: Polyglycerin fatty acid ester Spherical Particle size of 0.1 mm Melting point of 80°C

**Table (T-7): Effect of the present invention due to difference in melting point of fat or oil, or emulsifier**

| | A | B | C | D | E | F | G | H |
|---|---|---|---|---|---|---|---|---|
| Condition of reconstitution with hot water | Poor | Poor | Good | Good | Good | Poor | Ordinary | Poor |
| Food texture | Poor | Poor | Good | Good | Good | Poor | Ordinary | Poor |

As shown in the results of Table (T-7), at first, it is found that cavities could not be formed in the interior of the noodle strips, when the liquid or pasty fat or oil was used, whereby the effect of the present invention cannot be obtained. On the other hand, when the melting point of the fat or oil was higher than 75°C, the resultant texture (or oral sensation) of the noodle strips became powdery. In a case where the present invention is applied to the noodle strips, the melting point of the fat or oil may preferably be 50°C to 70°C (more preferably 50°C to 65°C).

### <Difference due to Addition Amount of Fat or oil>

In order to show the effect of the present invention in the amount of the a fat or oil to be added to eh raw material, tests on the addition amount thereof were carried out in the above-mentioned condition (T-6). For the purpose of comparison with the above condition, a type of test without using the vacuum dough sheet-extruding machine was also conducted. The test method used herein was based on the "test B". The powdered fat or oil to be used herein was an extremely hardened palm oil having a melting point of 62°C and an average particle size of 0.1 mm.

**Table (T-8-A): Effect of invention on addition amount of fat or oil**

| Vacuum dough sheet-extruding machine | Not used | Not used | Not used | Not used | Not used | Not used | Not used | Not used | Not used | Not used | Not used |
|---|---|---|---|---|---|---|---|---|---|---|---|
| Addition amount | 0.1% | 0.3% | 0.5% | 0.6% | 1% | 1.5% | 3.0% | 5.0% | 8% | 10% | 12% |
| Reconstitution with hot water | Poor | Poor | Ordinary | Good | Good | Excellent | Excellent | Excellent | Excellent | Excellent | Excellent |
| Noodle-making suitability | Good | Good | Ordinary | Ordinary | Ordinary | Poor | Poor | Poor | Poor | Poor | Poor |
| Strength of noodles after steam cooking | Good | Good | Ordinary | Ordinary | Ordinary | Poor | Poor | Poor | Poor | Poor | Poor |

**Table (T-8-B): Effect of invention on addition amount of fat or oil**

| Vacuum dough sheet-extruding machine | Used | Used | Used | Used | Used | Used | Used | Used | Used | Used | Used |
|---|---|---|---|---|---|---|---|---|---|---|---|
| Addition amount | 0.1% | 0.3% | 0.5% | 0.6% | 1% | 1.5% | 3.0% | 5.0% | 8% | 10% | 12% |
| Reconstitution with hot water | Poor | Poor | Poor | Ordinary | Ordinary | Good | Excellent | Excellent | Excellent | Excellent | Excellent |
| Noodle-making suitability | Excellent | Excellent | Excellent | Excellent | Excellent | Excellent | Excellent | Excellent | Good | Good | Good |
| Strength of noodles after steam cooking | Excellent | Excellent | Excellent | Excellent | Excellent | Excellent | Excellent | Excellent | Good | Good | Good |

As shown in the results of the above Tables (T-8-A) and (T-8-B), with respect to the addition amount of the fat or oil, the effect of the present invention can be obtained in the case of the addition amount of 0.5% or more. However, when the addition amount of the fat or oil is increased without using the vacuum dough sheet-extruding machine, the noodle-making suitability and noodle strength after the steam cooking are drastically decreased, and accordingly, it becomes difficult to perform the continuous production of the noodles. Therefore, as shown in the results of Table (T-8), the combination of the vacuum dough sheet-extruding machine and the powdered fat or oil is essential.

### [Example 1]

Wheat flour (1,000 g, ASW, protein content 9.5%) as powder raw material, was mixed with 15 g of a powdered spherical palm oil having a melting point of 62°C (spray cooling method), and the resultant mixture was kneaded with kneading water, which.had been prepared by dissolving 3 g of alkaline brine solution and 10 g of common salt in 320 ml of water, to thereby obtain dough for noodles. The thus obtained dough was subjected to extruding by using an extruder or an extrusion molding machine. By use of the machine, a pressure was applied to the dough for noodles while degassing the interior of the machine at a degree of vacuum of 730 mmHg, to thereby extrude the dough in a cylindrical shape through dies each having a diameter of 8 mm. The dough was then cut into chips thereof each having a length of 20 mm. The resultant lumps of the dough were subjected to a "dough-sheet production by compounding" step, and thereafter, formed into noodle strips with a cutting edge of 20 (rectangular) and a noodle thickness of 1.20 mm, and the noodle strips were continuously subjected to steam-cooking. The thus obtained steam-cooked noodle strips were cut into lumps of steam-cooked noodles each having a weight of 90 g, and then were introduced into drying baskets so that the noodle strips are shaped and each of the drying baskets was filled with the noodle strips in an amount of one meal thereof. Then, the noodle strips were dried in a dryer for 40 minutes which had been set at a temperature of 80°C and a wind velocity of 4 m/s, to thereby obtain instant Chinese noodles having a final moisture content of 10%.

### [Example 2]

Wheat flour (900 g, ASW, protein content 9.5%) and 100 g of a potato starch as powder raw materials, were mixed with 15 g of a powdered spherical palm oil having a melting point of 50°C (drum drying method), and the resultant mixture was kneaded with kneading water, which had been prepared by dissolving 3 g of alkaline brine solution and 10 g of common salt in 320 ml of water, to thereby obtain dough for noodles. The thus obtained dough was subjected to extruding by using an extruder or an extrusion molding machine. By use of the machine, a pressure was applied to the dough for noodles while degassing the interior of the machine at a degree of vacuum of 730 mmHg, to thereby extrude the dough in a cylindrical shape through dies each having a diameter of 8 mm. The dough was then cut into chips thereof each having a length of 20 mm. The resultant lumps of the dough were subjected to a "dough-sheet production by compounding" step, and thereafter, formed into noodle strips with a cutting edge of 20 (rectangular) and a noodle thickness of 1.20 mm, and the noodle strips were continuously subjected to steam-cooking. The thus obtained steam-cooked noodle strips were cut into lumps of steam-cooked noodles each having a weight of 90 g, and then were introduced into drying baskets so that the noodle strips are shaped and each of the drying baskets was filled with the noodle strips in an amount of one meal thereof. Then, the noodle strips were dried in a dryer for 40 minutes which had been set at a temperature of 80°C and a wind velocity of 4 m/s, to thereby obtain instant Chinese noodles having a final moisture content of 10%.

### [Example 3]

Wheat flour (900 g, ASW, protein content 9.5%) and 100 g of tapioca starch potato starch as powder raw materials, were mixed with 15 g of a powdered spherical emulsifier having a melting point of 62°C (organic acid monoglycerin), and the resultant mixture was kneaded with kneading water, which had been prepared by dissolving 3 g of alkaline brine solution and 10 g of common salt in 320 ml of water, to thereby obtain dough for noodles. The thus obtained dough was subjected to extruding by using an extruder or an extrusion molding machine. By use of the machine, a pressure was applied to the dough for noodles while degassing the interior of the machine at a degree of vacuum of 730 mmHg, to thereby extrude the dough in a cylindrical shape through dies each having a diameter of 8 mm. The dough was then cut into chips thereof each having a length of 20 mm. The resultant lumps of the dough were subjected to a "dough-sheet production by compounding" step, and thereafter, formed into noodle strips with a cutting edge of 20 (rectangular) and a noodle thickness of 1.20 mm, and the noodle strips were continuously subjected to steam-cooking. The thus obtained steam-cooked noodle strips were cut into lumps of steam-cooked noodles each having a weight of 90 g, and then were introduced into drying baskets so that the noodle strips are shaped and each of the drying baskets was filled with the noodle strips in an amount of one meal thereof. Then, the noodle strips were dried in a dryer for 40 minutes which had been set at a temperature of 80°C and a wind velocity of 4 m/s, to thereby obtain instant Chinese noodles having a final moisture content of 10%.

### [Comparative example 1]

The conditions used in this Comparative example 1 were the same as those used in Example 1, except that 15 g of the powdered spherical palm oil (spray cooling method, 0.15 mm) having a melting point of 62°C as the blending component used in Example 1 was not used.

### [Comparative example 2]

The conditions used in this Comparative example 2 were the same as those used in Example 2, except that 15 g of the he powdered spherical palm oil (drum drying method, 0.10 mm) having a melting point of 50°C as the blending component used in Example 2 was not used.

### [Comparative example 3]

The conditions used in this Comparative example 3 were the same as those used in Example 3, except that 15 g of the powdered spherical emulsifier (organic acid monoglycerin, spray cooling method, 0.2 mm) having a melting point of 62°C as the blending component used in Example 3 was not used.

The following Table (T-9) shows the above-mentioned evaluation results in Examples 1 to 5n.

**Table (T-9): Evaluation of Examples**

| | Viscoelasticity | Stiffness | Reconstitution with hot water |
|---|---|---|---|
| Example 1 | 4 | 5 | 4 |
| Example 2 | 5 | 5 | 5 |
| Example 3 | 5 | 5 | 5 |
| Relative Example 1 | 3 | 10 | 1 |
| Relative Example 2 | 4 | 9 | 1 |
| Relative Example 3 | 4 | 10 | 1 |

As shown in Table (T-9), it will be understood that the texture of the noodles can clearly be improved in the Examples according to the present invention, in comparison with those of Comparative examples. It will also be understood that the method used in these Example was a production process which takes advantage of the feature of the vacuum dough sheet-extruding machine.

### (Comparative Test Example 1)

It was examined what differences would be caused with or without using the vacuum dough sheet-extruding machine. That is, by use of the noodle materials which had been produced by the following method, various properties (texture, transparency, heaviness of the noodle strips) were examined by the following method.

### <Test Method>

The test method used herein was the substantially the same as that of the "test method A" appearing hereinafter, except that this test was carried out at two kinds of vacuum degrees of 0 mmHg and 760 mmHg.

As a result of the above tests, it was found that any of the texture, transparency, heaviness of the noodle strips and the like can be improved to a higher level in comparison with those produced by use of a low-temperature drying methods in the prior art, when an extruder or the like under degassing (for example, a degassing device (or vacuum dough sheet-extruding machine) disclosed in Japanese Patent Application No. 59-254855, etc.) is applied to hot-air dried noodles.

The following Table (T-1) shows the thus obtained results.

**Table (T-1): Evaluation with or without using vacuum dough sheet-extruding machine in hot-air drying method**

| | Viscoelasticity | Transparency at the time of eating | Heaviness of noodle strips at the time of eating | Reconstitution with hot water | Stiffness |
|---|---|---|---|---|---|
| Vacuum dough sheet-extruding machine was not used | 1 | 3 | 2 | 3 | 2 |
| Vacuum dough sheet-extruding machine was used (extraction of dough sheet) | 4 | 5 | 5 | 1 | 10 (too strong stiffness) |

With respect to the stiffness, score "5" was most excellent. When the score became larger than 5, it shows that the stiffness was too strong.

From the results of Fig-1, it will be understood that the effect of the vacuum dough sheet-extruding machine was clearly obtained.

The above-mentioned satisfactory effects are obtained, by using the vacuum dough sheet-extruding machine, but there was a tendency that reconstitution with hot water becomes poor, and also the stiffness becomes too strong, and the feature of the vacuum dough sheet-extruding machine are excessively exhibited. More specifically, the tendency became stronger in the case of "snack noodles".

### (Comparative Test Example 2)

It was examined what differences would be caused by a difference in the degree of vacuum. That is, by use of the noodle materials which had been produced by the following methods, various properties (texture, transparency, heaviness of noodle strips) were examined by the following method.

The following Table (T-2) shows differences in texture due to the vacuum degree.

The test method used herein was based on the following "test method A".

### Test Method A

Wheat flour (800 g) and potato starch (200 g), as powder raw materials, were mixed with each other, and the resultant mixture was kneaded with kneading water, which had been prepared by dissolving 3 g of alkaline brine solution and 10 g of common salt in 320 ml of water, to thereby obtain dough for noodles. The thus obtained dough was subjected to extruding by using an extruder or an extrusion molding machine. By use of the machine, a pressure was applied to the dough for noodles while degassing the interior of the machine at a degree of vacuum within a range from 400 to 760 mmHg, to thereby extrude the dough in a cylindrical shape through dies each having a diameter of 8 mm. The dough was then cut into chips thereof each having a length of 50 mm. The resultant lumps of the dough were subjected to a "dough-sheet production by compounding" step, and thereafter, formed into noodle strips with a cutting edge of 20 (rectangular) and a noodle thickness of 1.20 mm, and the noodle strips were continuously subjected to steam-cooking. The thus obtained steam-cooked noodle strips were cut into lumps of steam-cooked noodles each having a weight of 90 g, and then were introduced into drying baskets so that the noodle strips are shaped and each of the drying baskets was filled with the noodle strips in an amount of one meal thereof. Then, the noodle strips were dried in a dryer for 40 minutes which had been set at a temperature of 80°C and a wind velocity of 4 m/s, to thereby obtain instant Chinese noodles having a final moisture content of 10%.

**Table (T-2): Difference in features (texture) of vacuum dough sheet-extruding machine due to vacuum degree**

| | 400 mmHg | 500mmHg | 600 mmHg | 650 mmHg | 700 mmHg | 760 mmHg |
|---|---|---|---|---|---|---|
| Viscoelasticity | 3 | 3 | | 5 | 5 | 5 |
| Transparency at the time of eating | 3 | 4 | 4 | 5 | 5 | 5 |
| Heaviness of noodle strips at the time of eating | 2 | 3 | 4 | 5 | 5 | 5 |
| Reconstitution with hot water | 5 | 5 | 5 | 5 | 5 | 5 |
| Stiffness | 2 | 3 | 4 | 5 | 5 | 5 |
| Production capability | 1 | 1 | 1 | 4 | 5 | 5 |
| Load of vacuum pump | Poor | Polor | Poor | ordinary | Good | Good |

As shown in the above Table (T-2), when the vacuum degree was adjusted to 600 mmHg or less, there was a tendency that it becomes difficult to exhibit the features of the dough sheet, which had been produced by using vacuum dough sheet-extruding machine. Further, when the load of the vacuum pump is increased, the failure in the vacuum pump is liable to occur and it becomes difficult to conduct the continuous production of noodles, whereby the production capability is drastically worsened. That is, when the vacuum degree was inadequately controlled, the advantages of the vacuum dough sheet-extruding machine are spoiled, and also the production capability is worsened or the production of the noodles becomes difficult.

When the vacuum degree is decreased, the features of the vacuum dough sheet-extruding machine can easily be spoiled. In this case, the above-mentioned problems encountered in the prior art, such as "poor reconstitution with hot water" and " feel for strong density of noodle strips" can be solved to a certain extent. On the other hand, however, the feature of the vacuum dough sheet-extruding machine, such as transparency and heaviness of noodle strips are worsened. Further, it was found that the method of simply decreasing the vacuum degree can cause the excess load on the vacuum pump, and accordingly, it was not easy to conduct the continuous production of the noodles.

### Explanation of Reference Numerals

1 Prop (unfastening stick; diameter 6 mm, 22 mm in length)
2 Partition plate (24 mm)
3 Bottom plate (measuring 145 x 145 mm)
4 Vessel for Measurement (120 mm in height)

## Claims

1. A process for producing instant dried noodle, comprising:
Preparing a dough for noodle from a raw material for noodle comprising a main raw material, a solid fat or oil, and/or emulsifier; thereby forming the dough into small lumps or a plate shape, under the application a pressure by use of an extruder or
extrusion molding machine under a reduced pressure, producing noodle strips from the dough;
gelatinizing the noodle strips by using a boiling treatment using boiled water or a steam cooking treatment using steam; and
drying the noodle strips with hot air;
wherein the pressure is degassing condition of a range of 86.66 to 101.32 kPa (650 to 760 mmHg) (gauge pressure) in terms of vacuum degree;
wherein the main raw material comprises at least one selected from: wheat flour, durum powder, soba powder, barley flour and starch;
wherein the solid fat oil, and/or a emulsifier are both powdered and/or granular and wherein the fat or oil and/or emulsifier have a particle size of 0.1mm or more and produced by a spray cooling method or a drum drying method;
wherein the instant dried noodle has an "unfastening period of time" in hot water at 100°C of 80 second or less and
the unfastening period of time is measured by use of a measuring device comprising a vessel, a prop placed in the center of the bottom plate of the vessel, and a shaker for shaking the vessel, wherein the prop has a partition plate for placing thereon noodle strips; and by method wherein a mass of noodle strips are placed on the partition plate; hot water at 100°C is poured onto the vessel; the vessel is left standing for 3 minutes; and the vessel is shaken by a shaker until the mass of noodle strips completely falls from the partition plate.

2. A process for producing instant dried noodle according to claim 1, wherein the solid fat or oil, and/or emulsifier is a powdered and/or granular fat or oil, and/or emulsifier having a particle size of 0.1 mm or more.

3. A process for producing instance dried noodle according to claim 2, wherein, the powdered and/or granular fat or oil, or emulsifier has been produced by a spray cooling method.

4. A process for producing instance dried noodle according to claim 1, wherein the solid fat or oil, or the emulsifier has a melting point of 50°Ct o 70°C.

5. A process for producing instant dried noodle according to claim 1, wherein the addition amount of the solid fat or oil, or emulsifier is from 0.5 to 10%, based on the main raw material.

6. A process for producing instant dried noodle according to claim 1, wherein a steamer using steam is used for the gelatinization.

7. A process for producing instant dried noodle according to claim1, wherein the hot air to be used at the time of drying the instant noodle is hot air at a temperature within a range from 60°C to 100°C alone, or a combination thereof.

## Patentansprüche

1. Verfahren zur Herstellung von Instant-Trockennudeln, umfassend:
Bereitstellen von Nudelteig aus Rohmaterial für Nudeln, umfassend ein Hauptrohmaterial, ein festes Fett oder Öl und/oder einen Emulgator, wobei der Teig unter Anwendung von Druck durch Verwendung eines Extruders oder einer Extrusionsformungsmaschine unter einem vermindertem Druck in kleine Klumpen oder in eine Plattenform geformt wird, und Herstellen von Nudelstreifen aus dem Teig,
Gelieren der Nudelstreifen unter Verwendung einer Kochbehandlung unter Verwendung von kochendem Wasser oder einer Dampfkochbehandlung unter Verwendung von Dampf, und
Trocknen der Nudelstreifen mit heißer Luft,
wobei der Druck ein Entgasungszustand eines Bereichs von 86,66 bis 101,32 kPa (650 bis 760 mmHg) (atmosphärische Druckdifferenz) ist, was das Ausmaß des Vakuums anbelangt,
wobei das Hauptrohmaterial wenigstens eines ausgewählt aus Weizenmehl, Hartweizenpulver, Buchweizenpulver, Gerstenmehl und Stärke umfasst,
wobei das feste Fett oder Öl und/oder der Emulgator pulverig und/oder körnig sind und wobei das Fett oder Öl und/oder der Emulgator eine Partikelgröße von 0,1 mm oder mehr aufweisen und durch ein Sprühkühlungsverfahren oder ein Walzentrocknungsverfahren hergestellt ist,
wobei die Instant-Trockennudel eine "Lösungszeitspanne" in heißem Wasser bei 100 °C von 80 Sekunden oder weniger aufweist und
die Lösungszeitspanne unter Verwendung einer Messvorrichtung gemessen wird, die einen Behälter, eine im Zentrum der Bodenplatte des Behälters angeordnete Stütze und einen Rüttler zum Rütteln des Behälters umfasst, wobei die Stütze eine Teilungsplatte aufweist, um Nudelstreifen darauf anzuordnen, und durch ein Verfahren, bei dem eine Menge an Nudelstreifen auf der Teilungsplatte angeordnet wird, heißes Wasser bei 100 °C in den Behälter gegossen wird, der Behälter 3 Minuten stehen gelassen wird und der Behälter durch den Rüttler gerüttelt wird, bis die Menge an Nudelstreifen vollständig von der Teilungsplatte fällt.

2. Verfahren zur Herstellung von Instant-Trockennudeln nach Anspruch 1, wobei das feste Fett oder Öl und/oder der Emulgator ein pulveriges und/oder körniges Fett oder Öl und/oder Emulgator mit einer Partikelgröße von 0,1 mm oder mehr aufweisen ist.

3. Verfahren zur Herstellung von Instant-Trockennudeln nach Anspruch 2, wobei das pulverige und/oder körnige Fett oder Öl oder der Emulgator durch ein Sprühkühlungsverfahren hergestellt worden ist.

4. Verfahren zur Herstellung von Instant-Trockennudeln nach Anspruch 1, wobei das feste Fett oder Öl oder der Emulgator einen Schmelzpunkt von 50 °C bis 70 °C aufweist.

5. Verfahren zur Herstellung von Instant-Trockennudeln nach Anspruch 1, wobei die zusätzliche menge an festem Fett oder Öl oder Emulgator 0,5 bis 10 %, basierend auf dem Hauptrohmaterial, beträgt.

6. Verfahren zur Herstellung von Instant-Trockennudeln nach Anspruch 1, wobei zum Gelieren ein Dampf verwendender Dampfgarer benutzt wird.

7. Verfahren zur Herstellung von Instant-Trockennudeln nach Anspruch 1, wobei die beim Trocknen der Instant-Nudel zu verwendende heiße Luft heiße Luft bei einer Temperatur innerhalb eines Bereichs von 60 °C bis 100 °C alleine oder in Kombination davon ist.

## Revendications

1. Procédé de production de nouilles sèches instantanées, comprenant :
la préparation d'une pâte à nouilles à partir d'une matière brute pour nouilles comprenant une matière brute principale, une graisse ou une huile solide, et/ou un émulsifiant et la formation, à partir de cette pâte, de petits morceaux ou de plaques en appliquant une pression à l'aide d'une extrudeuse ou d'une machine pour extrusion ou moulage sous une pression réduite, produisant des lanières de nouilles à partir de la pâte,
la gélatinisation des lanières de nouilles au moyen d'un traitement par cuisson à l'eau bouillante ou d'un traitement de cuisson vapeur à l'aide de vapeur, et
le séchage des lanières de nouilles à l'air chaud,
procédé, dans lequel la pression est un état de dégazage compris dans une plage de 86,66 à 101,32 kPa (650 à 760 mmHg) (pression manométrique) en termes de degré de vide,
procédé, dans lequel la matière brute principale comprend au moins un ingrédient sélectionné parmi les suivants : farine de blé, poudre de blé dur, poudre de sarrasin, farine d'orge et amidon,
procédé, dans lequel la graisse ou l'huile solide, et/ou un émulsifiant sont tous deux en poudre et/ou granulaires et
dans lequel la graisse ou l'huile et/ou l'émulsifiant présentent une grosseur de grains de 0,1mm ou plus et sont obtenus par un procédé de refroidissement par pulvérisation ou de séchage sur cylindre,
procédé, dans lequel les nouilles sèches instantanées présentent une « durée de ramollissement » de 80 secondes ou moins en eau chaude à 100°C et
la durée de ramollissement est mesurée à l'aide d'un dispositif de mesure, qui comprend un récipient, un support placé au centre de la plaque de fond du récipient et un agitateur pour agiter le récipient, le support présentant une plaque séparatrice pour y placer des lanières de nouilles, et d'un procédé, suivant lequel une masse de lanières de nouilles est placée sur la plaque séparatrice, de l'eau chaude à 100°C est versée dans le récipient, le récipient est laissé au repos pendant 3 minutes, puis il est agité par un agitateur jusqu'à ce que les lanières de nouilles tombent complètement de la plaque séparatrice.

2. Procédé de production de nouilles sèches instantanées suivant la revendication 1, dans lequel la graisse ou l'huile solide et/ou l'émulsifiant sont une graisse ou une huile en poudre et/ou granulaire et/ou l'émulsifiant présente une grosseur de grains de 0,1 mm ou plus.

3. Procédé de production de nouilles sèches instantanées suivant la revendication 2, dans lequel la graisse et/ou l'huile en poudre et/ou granulaire ou l'émulsifiant ont été produits par un procédé de refroidissement par vaporisation.

4. Procédé de production de nouilles sèches instantanées suivant la revendication 1, dans lequel la graisse ou l'huile solide ou l'émulsifiant présente un point de fusion de 50° à 70°C.

5. Procédé de production de nouilles sèches instantanées suivant la revendication 1, dans lequel la quantité d'addition de graisse ou d'huile solides ou d'émulsifiant est de 0,5 à 10% sur la base de la matière brute principale.

6. Procédé de production de nouilles sèches instantanées suivant la revendication 1, dans lequel un autocuiseur à vapeur est utilisé pour la gélatinisation.

7. Procédé de production de nouilles sèches instantanées suivant la revendication 1, dans lequel l'air chaud employé au moment du séchage des nouilles instantanées est de l'air chaud à une température comprise dans une plage de 60°C à 100°C seul ou en association.
